# EUROPEAN PATENT APPLICATION

(11) **EP 2 672 193 A1**
(43) Date of publication of application: **11.12.2013**
(21) Application number: 11857910.1
(22) Date of filing: 11.05.2011
(51) Int. Cl.: F24H 1/48, F24D 3/02, F24D 3/08

(54) **BOILER HAVING INTEGRATED NITROGEN TANK AND HEAT EXCHANGER**

(30) Priority: 01.02.2011 KR 20110009872; 31.03.2011 KR 20110029297
(71) Applicant: Choi, Jin-min, Seoul 140-854 (KR); Choi, Sung-hwan, Seoul 140-050 (KR)
(72) Inventor: Choi, Jin-min, Seoul 140-854 (KR); Choi, Sung-hwan, Seoul 140-050 (KR)
(74) Representative: Spengler, Robert
(86) International application number: PCT/KR2011/003459
(87) International publication number: WO 2012/105732

(57) **Abstract**

The present invention relates to a boiler comprising: a casing having a heated water inlet/outlet and a hot water inlet/outlet; a nitrogen packed tank placed at the lower region of the casing for nitrogen gas to be packed therein; an elastic pocket, which is located inside the nitrogen packed tank for inflow/outflow of the heated water, and elastically transforms the volume thereof according to the inflow/outflow of the heated water; and a hot water heat exchanger placed at the upper region of the casing for adjusting the temperature of the hot water.

## Description

### TECHNICAL FIELD

The present invention relates to a boiler, and more particularly relates to a boiler integrally equipped with nitrogen packed tank and a hot water heat exchanger.

### BACKGROUND ART

Domestic boilers are equipped with pressurized expansion tank blocked out from the atmosphere so that even if the heating pipe is located above the expansion tank, water does not overflow. In other words, when the water temperature inside the pipe rises as the boiler is running and the volume increases, the pressure inside the pipe increases and the pressure is absorbed by the diaphragm and the nitrogen inside the expansion tank.

Therefore, due the expansion tank blocked out from the atmosphere, the amount of dissolved oxygen inside the pipe is decreased. This offers the advantage of preventing corrosion of the heat exchanger and the pipe and thus increasing the durability of the boiler.

However, for such traditional boilers, the heat exchangers and the nitrogen packed tanks are furnished separately from the boilers, thus making the manufacturing cost high.

Furthermore, when the user turns on the hot water faucet, such traditional boilers do not immediately provide hot water.

### DISCLOSURE

### Technical Problem

The purpose of the present invention is to overcome the drawbacks detailed above by providing a boiler equipped with a nitrogen packed tank and a hot water heat exchanger as an integral article.

Moreover, another purpose of the present invention is to provide a boiler that has always a constant volume of water in contact with the heat exchanger and therefore has the capability to immediately supply hot water when one turns on the hot water faucet.

### Technical Solution

To resolve the above-mentioned technical challenges, one aspect of the present invention relates to a boiler. The present invention relates to a boiler comprising: a casing having a heated water inlet/outlet and a hot water inlet/outlet; a nitrogen packed tank placed at the lower region of the casing for nitrogen gas to be packed therein; an elastic pocket, which is located inside the nitrogen packed tank for inflow/outflow of the heated water, and elastically transforms the volume thereof according to the inflow/outflow of the heated water; and a hot water heat exchanger placed at the upper region of the casing for adjusting the temperature of the hot water.

In accordance with an embodiment of the present invention, the hot water heat exchanger creates a vortex in the hot water that flows in through the circulation pump.

On the other hand, the present invention comprises of: a first casing; a second casing which can be assembled with the first casing and having a heated water inlet/outlet and a hot water inlet/outlet and a water circulation space for the heated water; a nitrogen packed tank placed inside the first casing for nitrogen gas to be packed therein; an elastic pocket, which is located inside the nitrogen packed tank, allows the heated water of the second casing to circulate, and elastically transforms the volume thereof according to the inflow/outflow of the heated water; and a hot water heat exchanger placed inside the second casing for circulating the heated water of the second casing.

In accordance with another embodiment of the present invention, the hot water heat exchanger takes the form of a coil spirally wound multiple times. Multiple water guides are placed at the central area of the hot water exchanger, having constant separation in-between, and are perpendicular to the spiral direction of the heat exchanger. The water guides shield the flow of the heated water when the heated water circulates inside the second casing thereby creating a vortex in the heated water increasing the heat exchange efficiency between the hot water heat exchanger and the heated water.

In accordance with yet another embodiment, there is a compartment board that divides the first and the second casing and the surface of the compartment board includes multiple depressions of constant depth that shields the flow of the heated water.

In accordance with still another embodiment of the present invention, the surface of the second casing includes multiple inward depressions that shield the flow of the heated water.

### ADVANTAGEOUS EFFECTS

The boiler in the present invention is integrally equipped with a nitrogen packed tank and a hot water heat exchanger. Such integration offers a simple heated water circulation structure of the boiler and the overall structure of the boiler and consequentially decreases the manufacturing costs.

Furthermore, a constant volume of water is always in contact with the heat exchanger and therefore when one turns on the hot water faucet, hot water is immediately supplied without any wait time.

Moreover, the water guides and the inward depressions inside the casing create a vortex in the heated water at the heat exchanger and thereby increasing the heat exchange performance of the hot water.

### DESCRIPTION OF DRAWINGS

FIG. 1 is a cross-sectional diagram illustrating roughly the structure of the boiler of the present invention;
FIG. 2 is a diagram illustrating the structure of the boiler system of the present invention;
FIGS. 3 and 4 are diagrams illustrating different embodiments of the boiler of the present invention;
FIG. 5 is a cross-sectional diagram illustrating structure of the boiler according to an embodiment of the present invention;
FIG. 6 is a diagram illustrating the assembly process of the boiler according to an embodiment of the present invention

### BEST MODE

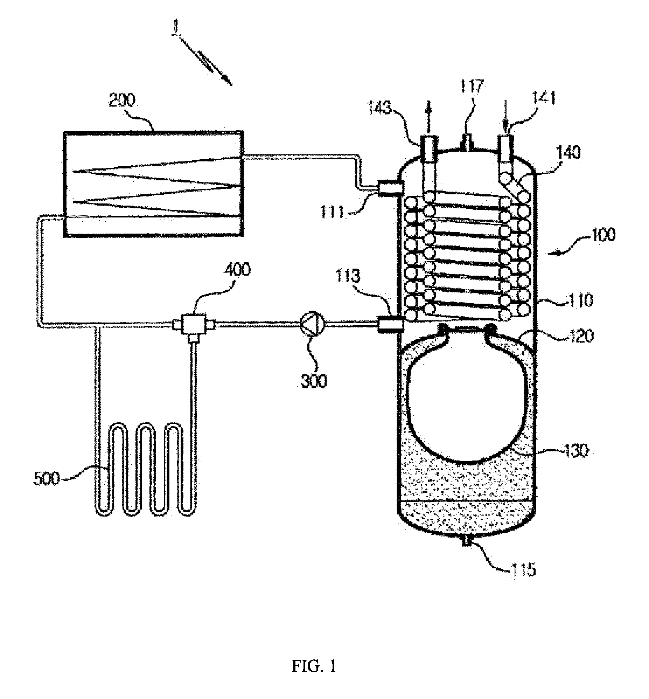

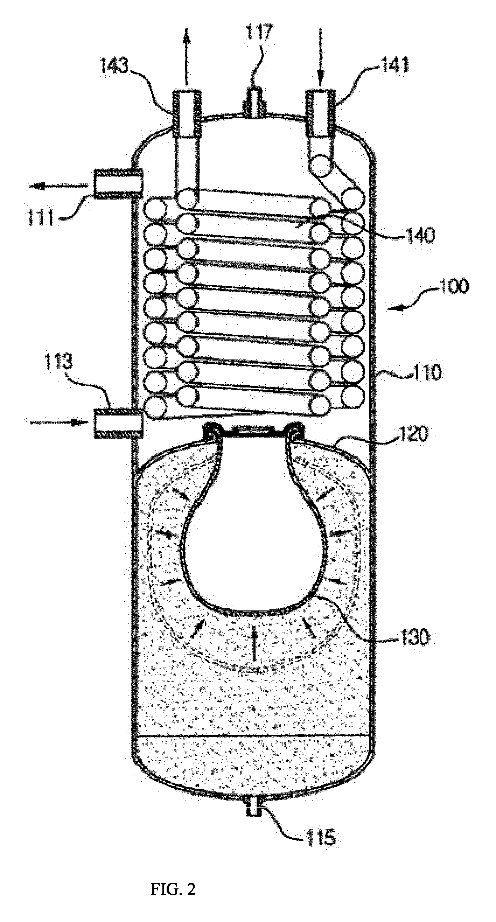

FIG. 1 is a cross-sectional diagram illustrating roughly the internal structure of the boiler (100) of the present invention and FIG. 2 is a diagram illustrating roughly the boiler system of the present invention.

Referring to FIGS. 1 and 2, the boiler according to the present invention comprises of a casing (110), a nitrogen packed tank placed at the lower region of the casing, an elastic pocket, which is located inside the nitrogen packed tank for inflow/outflow of the heated water, and elastically transforms the volume thereof according to the inflow/outflow of the heated water, and a hot water heat exchanger placed at the upper region of the casing for adjusting the temperature of the hot water.

The casing's (110)volume can accommodate a nitrogen packed tank (10) and a hot water heat exchanger (140) and allows heated water to circulate within the casing. The casing (110) has a heated water inlet (111) and outlet (113). Furthermore, casing (110) includes a nitrogen packing inlet (115) for packing nitrogen inside the nitrogen packing tank (120).

The nitrogen packing tank (120) is equipped inside the casing (110) so that the volume of the elastic pocket (130) elastically transforms according to the inflow/outflow of the heated water. The nitrogen packing tank 9120) is a sealed pressure tank and the nitrogen is packed within at pressure of 1∼2 bar.

The elastic pocket is equipped inside the nitrogen packing tank (120). The elastic pocket includes an open inlet so that the heated water can flow in and out. The heated water is replenished inside the casing (110) so that when the water level rises the elastic pocket (130) takes in the heated water by expanding and when the heated water decreases in amount, the volume elastically contracts due the pressure of the nitrogen. The elastic pocket (130) is shaped like a balloon and made out of rubber.

When the bolier (100) is operational, the temperature of the heated water increases expanding volume of the elastic pocket (220). On the other hand, when the temperature of the heated water drops decreasing the volume of the heated water, the heated water that expanded exterior to the elastic pocket (130) flows out. The elastic pocket (130) continuously expands and contracts while the boiler (100) is running.

The heat exchanger (140) exchanges the heat retained in the heated water with the hot water thereby increasing the temperature of the cold water inside the casing (110). The heat exchange (140) of the present invention takes the form of a coil spirally wound multiple times in order to increase the heat exchange efficiency. The cold water flows in through a first end (141) of the heat exchanger (140) and the hot water that increased its temperature through the heat exchange of the heated water flows out through a second end (143).

At such time, as illustrated by FIG. 2, the circulation pump (300) circulates the heated water to the periphery of the heat exchanger (140) thereby creating a vortex. This maximizes the heat exchange efficiency between the hot water and the heated water.

The operation of the boiler (100) of the present invention having the above mentioned structure is described in reference to FIGS. 1 and 2. When the boiler system (1) is operating, the heated water heated by the heat exchanger (140) flows in through the heated water inlet (111) of the casing (110). When the water level rises due to the heated water flowing into the casing (110), the heated water flows into the elastic pocket (130).

The heated water flows into the elastic pocket (130) and as the temperature of the heated water increases, the elastic pocket in its shrunken state as illustrated in FIG. 1 elastic expands as illustrated in FIG. 2 due to the volume increase of the heated water.

The heated water flows out through the heated water outlet (113) and passes through the circulation pump (300) and a three-way valve (400) and is supplied to the radiator or places to be heated (500).

Meanwhile, as the heated water circulates inside the casing (110) through the circulation pump (300), because there is constant volume of water stored inside the heat exchanger (140), the warm temperature is sustained through the heat exchange. Therefore, when the user turns on the hot water, hot water is supplied immediately.

As seen before, the boiler in the present invention is integrally equipped with a nitrogen packed tank and a hot water heat exchanger. Such integration offers a simple heated water circulation structure of the boiler and the overall structure of the boiler and consequentially decreases the manufacturing costs.

Furthermore, a constant volume of water stored inside the heat exchanger (140) is always in contact with the heated water and therefore when one turns on the hot water faucet, hot water is immediately supplied without any wait time.

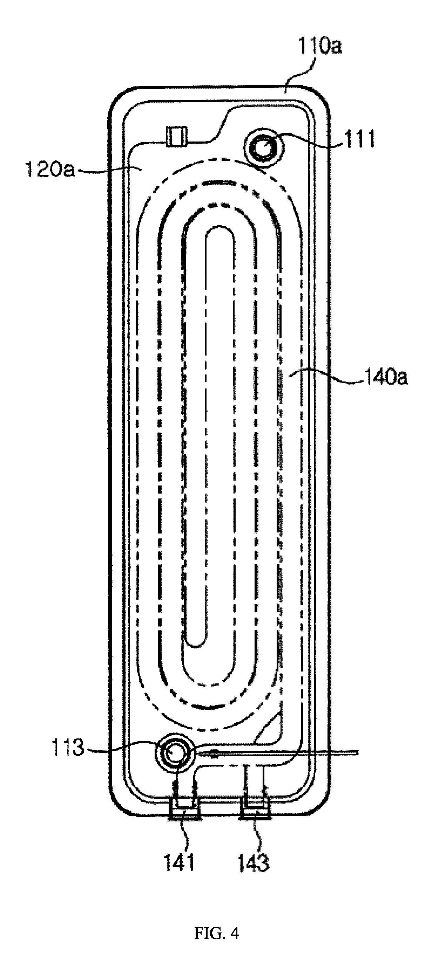

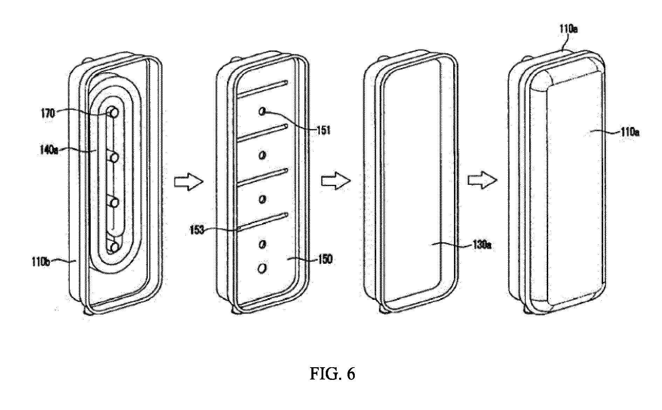

Meanwhile, FIGS. 4 and 6 are diagrams that illustrate different embodiments of the boiler (100a).

As described before, in accordance with the preferred embodiment of the boiler (100), the nitrogen packed tank (120) and the heat exchanger (140) are arranged vertically above and below of each other. On the other hand, in accordance with another preferred embodiment of the present invention, the boiler (100a) comprises a pair of casings (110a, 110b) and a nitrogen packed tank (120a) and an heat exchanger (140a) are horizontally aligned to the left and right of the casings.

An elastic pocket (130a) expands and contracts depending on the amount of heated water flowing into the casing (110a) and the hot water is heated up through the heat exchange between the heated water and the heat exchanger (140a).

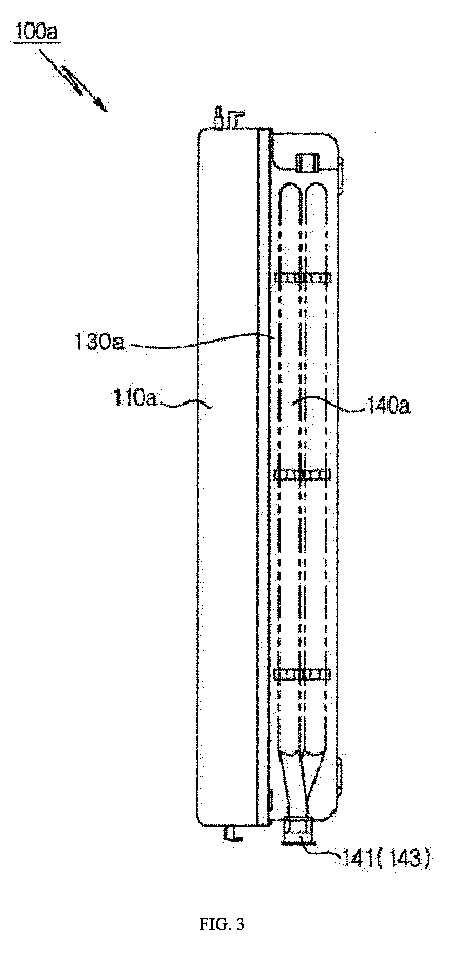

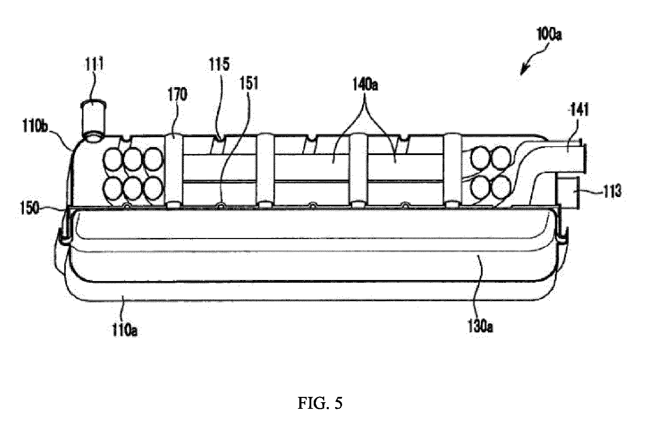

FIGS. 3 and 4 illustrate the internal structure of a first casing (110a) and a second casing (110b) and FIG. 5 is a cross-sectional diagram illustrating structure of the boiler according to another embodiment of the present invention and FIG. 6 is a diagram illustrating the assembly process of the boiler according to another embodiment of the present invention.

As illustrated, in accordance with another embodiment of the present invention, the boiler (100a) includes the first casing (110a) integrally equipped with a nitrogen packed tank (120a) and inside the nitrogen packed tank is an elastic pocket (130a).

Furthermore, the second casing (110b) includes circulation space for the heated water and inside the heat exchanger (140a). The second casing (110b) includes a heated water inlet (111) and outlet (113) and allows circulation of the heated water within the second casing (110b).

The heat exchange (140) of the present invention takes the form of a coil spirally wound.

Here, as illustrated in FIG. 6, there is a compartment board (150) that divides the first casing (110a) and the second casing (110b). The compartment board (150) is assembled so that it adheres to the inner surface of the second casing (110b). The surface of the compartment board (150) includes multiple holes (151) having constant separation in-between that allows the heated water of the second casing (110b) to flow to the elastic pocket (130a). Also, the surface of the compartment board (150) includes multiple depressions (153) of constant depth toward the direction of the second casing (110b). The depressions (153) of constant depth shield or block the flow of the heated water within the second casing (110b).

Furthermore, as illustrated in FIG. 5, the surface of the second casing (110b) includes multiple inward depressions (115). The inward depressions (115) also shield the flow of the heated water within the second casing (110b).

Also, the second casing (110b) includes multiple water guides (170) that are perpendicular to the spiral direction of the heat exchanger. The water guides (170) having constant separation in-between are placed within the second casing (110b) and prevent the flow of the heated water within the second casing (110b).

The water guides (170), depressions (153), and inward depressions (115) shield the flow of the heated water thereby creating a vortex in the heated water at the heat exchanger (140a) of the second casing (110b). Such vortex increases the heat exchange efficiency between the heat exchanger (140a) and the heated water.

Without the water guides (170), depressions (153), and inward depressions (115), the heat stagnates at the surface of the heat exchanger (140a) and the nitrogen packed tank (120a) and the heat exchange does not take place.

Multiple water guides are placed at the central area of the hot water exchanger, having constant separation in-between, and are perpendicular to the spiral direction of the heat exchanger. The water guides shield the flow of the heated water when the heated water circulates inside the second casing thereby creating a vortex in the heated water increasing the heat exchange efficiency between the hot water heat exchanger and the heated water.

Moreover, the water guides and the inward depressions inside the casing create a vortex in the heated water at the heat exchanger and thereby increasing the heat exchange performance of the hot water.

Therefore, in accordance with a different embodiment of the present invention, the boiler (100a) can use the stagnant heat produced from the vortex created by the geometrical structure of the water guides (170), depressions (153) and inward depressions (115) as energy.

In accordance with a different embodiment of the present invention, the assembly structure of the boiler (110a) is described in reference to FIG. 6.

First, the heat exchanger is placed inside the heat exchanger (140a) in the form of a coil and the multiple water guides (170) are placed at the central area of the hot water exchanger (140b).

Then, the compartment board (150) is assembled at the front side of the second casing (110b). The compartment board (150) is press fitted at the inner side of the second casing and the conjoined area is corked. The elastic pocket (130a) is placed at the outer side of the compartment board (150) and the first casing (110a) is placed at the outer side of the elastic pocket (130a). The first casing (110a) is press fitted inside the second casing (110b) to anchor the first casing's (110a) position.

The completely assembled boiler is integrally equipped with a nitrogen packed tank and a heat exchanger. Such integration offers a simple heated water circulation structure of the boiler and the overall structure of the boiler and consequentially decreases the manufacturing costs and creates a vortex thereby increasing the heat exchange efficiency.

### INDUSTRIAL APPLICABILITY

The different embodiments of the present invention's boiler are merely illustrative and various modifications to the embodiments and other equivalent embodiments will be readily apparent to those skilled in the art. Thus, the present invention is not intended to be limited to the embodiments shown. As such, the scope of protection of the present invention should be based on the technical principles of the scope of the attached claims. Also, all suitable modifications, variations, and equivalents which may be resorted to are intended to fall within the true spirit, concept, and scope of the invention and its claims and their legal equivalents the general principles defined herein may be applied to other embodiments and applications without departing from the spirit and scope of the invention and its claims.

## Claims

1. A boiler comprising:
a casing having a heated water inlet/outlet and a hot water inlet/outlet;
a nitrogen packed tank placed at the lower region of the casing for nitrogen gas to be packed therein;
an elastic pocket, which is located inside the nitrogen packed tank for inflow/outflow of the heated water, and elastically transforms the volume thereof according to the inflow/outflow of the heated water; and
a hot water heat exchanger placed at the upper region of the casing for adjusting the temperature of the hot water.

2. The boiler of claim 1, wherein a hot water heat exchanger creates a vortex in hot water flowing in through a circulation pump.

3. A boiler comprising:
a first casing;
a second casing which can be assembled with the first casing and having a heated water inlet/outlet and a hot water inlet/outlet and a water circulation space for the heated water;
a nitrogen packed tank placed inside the first casing for nitrogen gas to be packed therein;
an elastic pocket, which is located inside the nitrogen packed tank and circulates heated water of the second casing, and elastically transforms the volume thereof according to the inflow/outflow of the heated water; and
a hot water heat exchanger placed inside the second casing for circulating heated water of the second casing.

4. The boiler of claim 3, wherein the hot water heat exchanger takes the form of a coil spirally wound multiple times and further comprising water guides placed at the central area of the hot water exchanger and having constant separation in-between, and are perpendicular to the spiral direction of the heat exchanger wherein the water guides shield the flow of the heated water when heated water circulates inside the second casing thereby creating a vortex in heated water increasing heat exchange efficiency between the hot water heat exchanger and the heated water.

5. The boiler of claim 3 or claim 4 further comprising a compartment board that divides the first and the second casing wherein surface of the compartment board includes multiple depressions of constant depth that shields the flow of heated water.

6. The boiler of claim 5 wherein surface of the second casing includes multiple inward depressions that shield flow of the heated water.
